# EUROPÄISCHE PATENTSCHRIFT

(11) **EP 2 243 147 B1**
(45) Veröffentlichungstag und Bekanntmachung des Hinweises auf die Patenterteilung: **16.03.2016**
(21) Anmeldenummer: 08870796.3
(22) Anmeldetag: 29.12.2008
(51) Int. Cl.: H01H 83/14, H02H 1/00, H02H 3/33

(54) **FEHLERSTROMSCHUTZSCHALTER**
RESIDUAL CURRENT DEVICE
COMMUTATEUR DE PROTECTION CONTRE LES COURANTS DE DÉFAUT

(30) Priorität: 17.01.2008 DE 102008004868
(43) Veröffentlichungstag der Anmeldung: 27.10.2010
(73) Patentinhaber: Siemens Aktiengesellschaft, 80333 München (DE)
(72) Erfinder: HUBER, Hans-Jürgen, 93047 Regensburg (DE); MARTEL, Jean-Mary, 93105 Tegernheim (DE); KLEEMEIER, Manfred, 93073 Neutraubling (DE)
(86) Internationale Anmeldenummer: PCT/EP2008/068317
(87) Internationale Veröffentlichungsnummer: WO 2009/089995

(56) Entgegenhaltungen:
- EP-A- 0 649 206
- WO-A-2006/007608
- WO-A-2007/121492
- DE-A1-102004 024 100
- GB-A- 2 260 043
- US-B1- 6 477 022

## Beschreibung

Die Erfindung befasst sich mit dem Schutz vor in einem Stromkreis auftretenden Lichtbögen.

Ein Lichtbogen kann in einem Stromkreis z. B. auftreten, wenn ein Lichtschalter defekt ist und der Abstand zwischen zwei Kontakten des Lichtschalters zu klein ist, als dass der Stromfluss unterbrochen werden könnte. Dann bildet sich eben zwischen den zwei Kontakten ein Lichtbogen aus. Neben einem im Stromkreis in Serie sich ausbildenden Lichtbogen kann der Lichtbogen auch zwischen Phase und Neutralleiter des Stromkreises entstehen. Treten Lichtbögen auf, so erhöht sich die Temperatur der umliegenden Bauteile, und es kann ein Brand entstehen.

Es ist daher sinnvoll, eine Einrichtung bereitzustellen, mit der ein Schutz vor Lichtbögen gewährleistet ist. In den USA, in denen die so genannte UL-Technik (Underwriters laboratories, Norm mit 110 V Netzspannung) verwendet wird, sind derartige Einrichtung sogar vorgeschrieben. Dort werden Lichtbogenschutzschalter eingesetzt, und zwar erfassen diese anhand vorbestimmter Kriterien, ob ein Lichtbogen in dem Stromkreis vorliegt und weisen selbst einen Trennkontakt auf, der im Falle des Vorliegens eines Lichtbogens geöffnet wird. Die in Lichtbogenschutzschaltern verwendeten Prinzipien sind in US-Patent 5,729,145 und US-Patent 6,031,699 beschrieben. In den europäischen Ländern, in denen die IEC-Technik (International Electrotechnical Commission, Norm mit einer Spannung von 230 V) eingesetzt wird, sind Lichtbogenschutzschalter nicht zwingend vorgeschrieben. Stromkreise in IEC-Technik sind mit Fehlerschutzstromschaltern und Leitungsschutzschaltern geschützt. Bekanntlich arbeiten Fehlerstromschutzschalter und Leitungsschutzschalter für die IEC-Technik aufgrund der Vorschriften unabhängig von der Netzspannung, sie beziehen also für die Unterbrechung des Stromkreises keine Energie aus dem Netz. Sollte zu diesen Einheiten noch ein eigener Lichtbogenschutzschalter hinzutreten, wäre dies mit einem hohen Aufwand verbunden.

In der WO 95/26586 A1 ist ein Fehlerstromschutzschalter beschrieben, der auch dann auslöst, wenn der Schutzschalter überhitzt wird. Bei diesem Schutzschalter wird ein Fehlerstrom dadurch erkannt, dass mittels eines Summenstromwandlers ein Differenzstrom erfasst wird. Wenn ein kritischer Differenzstrom auftritt, werden Schaltkontakte über einen Permanentmagnetauslöser und ein Schaltschloss geöffnet. Wird ein Bauteil des Schutzschalters überhitzt, ermöglicht es eine zusätzliche Schaltungsanordnung mit einem Thyristor und einem PTC-Widerstand, den Schutzschalter auch in diesem Fall auszulösen.

In der US 6,477,022 B1 ist ein Schutzschalter beschrieben, der eine Schaltung zum Erkennen eines Auftretens eines Lichtbogens und eine Schaltung zum Erkennen eines Fehlerstroms aufweist. Durch die Schaltungen wird jeweils ein elektrisches Signal erzeugt, wenn in einem Stromkreis ein Lichtbogen bzw. eine Fehlerstrom erkannt wird. Durch das elektrische Signal wird dann bewirkt, dass sich ein Trennkontakt öffnet. Die unterbricht eine Leitung des Schutzschalters. Zum Betreiben der beiden Schaltungen müssen diese mit elektrischer Spannung versorgt werden.

In der WO 2007/121492 A1 ist ein Fehlerstromschutzschalter beschrieben, der netzspannungsunabhängig bei Auftreten eines Fehlerstroms einen Mechanismus zum Unterbrechen von Leitungen auslösen kann. Der Fehlerstromschutzschalter weist zusätzlich eine Aufnahmeeinrichtung auf, über die sich ein elektronisches Modul an den Fehlerstromschutzschalter ankoppeln lässt. Über ein solches Modul können zusätzliche Funktionen in dem Fehlerstromschutzschalter bereitgestellt werden, wie z.B. ein Einstellen einer Auslöseverzögerung oder ein Austauschen von Daten über einen Kommunikationssignal. Um das Modul betreiben zu können, ist bei der Aufnahmeeinrichtung eine Spannungsversorgung für das Modul bereitgestellt. Durch das Modul kann auch der Mechanismus zum Unterbrechen der Leitungen ausgelöst werden.

Es ist Aufgabe der Erfindung, einen Schutz von Stromkreisen in IEC-Technik vor Lichtbögen zu ermöglichen, ohne dass ein übermäßiger Aufwand getrieben wird.

Die Aufgabe wird durch einen Fehlerstromschutzschalter mit den Merkmalen gemäß Patentanspruch 1 gelöst.

Die Erfindung besteht darin, einen herkömmlichen Fehlerstromschutzschalter (gemäß Oberbegriff von Patentanspruch 1) um eine zusätzliche Funktionalität, nämlich den Lichtbogenschutz, zu erweitern. Ein herkömmlicher Fehlerstromschutzschalter umfasst mehrere Verbindungsleitungen zwischen jeweils einem Eingangsanschluss und einem Ausgangsanschluss, so dass der Fehlerstromschutzschalter in einen Stromkreis schaltbar ist. In zumindest einer der Verbindungsleitungen ist ein Trennkontakt angeordnet. Dieser Trennkontakt wird vermittels geeigneter Mittel im Falle des Auftretens eines Fehlerstroms geöffnet. Diese arbeiten bei Fehlerstromschutzschaltern für die IEC-Technik, um die es vorliegend hier geht, unabhängig von einer an den Eingangsanschlüssen anliegenden Spannung, also unabhängig von der Netzspannung. Erfindungsgemäß werden nun Mittel zum Erfassen bereitgestellt, ob in einem Stromkreis, in dem die Verbindungsleitungen geschaltet sind, ein Lichtbogen auftritt, und es werden Mittel zum Öffnen jedes Trennkontakts im Falle des Auftretens eines Lichtbogens bereitgestellt. Durch die Integration des Lichtbogenschutzes in einen Fehlerstromschutzschalter können die Trennkontakte eines solchen auch im Falle des Auftretens eines Lichtbogens zum Unterbrechen des Stromkreises eingesetzt werden, und es müssen zum Lichtbogenschutz nicht eigene Trennkontakte bereitgestellt sein.

Die Erfindung nimmt in Kauf, dass in einem Fehlerstromschutzschalter, der bei der IEC-Technik bei einem Fehlerstrom seine Trennkontakte öffnen soll, ohne dass Energie aus dem Netz hierfür bereitgestellt werden muss, unter Umständen für eine zweite Funktionalität, nämlich für die Erkennung des Auftretens eines Lichtbogens und ein Auslösen hierbei, netzspannungsabhängig gearbeitet wird. Die bisher bekannten Mittel zum Erfassen, ob in einem Stromkreis ein Lichtbogen auftritt, umfassen nämlich Mikrocontroller und sind daher von einer Versorgungsspannung abhängig.

Die Mittel zum Öffnen jedes Trennkontakts werden im Falle eines Fehlerstroms auch zum Öffnen jedes Trennkontakts im Falle des Auftretens eines Lichtbogens genutzt. Üblicherweise weisen die Mittel zum Öffnen jedes Trennkontakts im Falle eines Fehlerstroms Detektionsmittel auf. Durch die Detektionsmittel läuft jeweils ein Teilabschnitt jeder Verbindungsleitung. Nun können die Mittel zum Öffnen jedes Trennkontakts im Falle des Auftretens eines Lichtbogens eine Umgehungsleitung mit einem Schalter umfassen, die eine der Verbindungsleitungen mit der anderen Verbindungsleitung derart verbindet, dass bei geschlossenem Schalter und im Falle, dass die Verbindungsleitungen in einem Stromkreis geschaltet sind, ein Strom durch den durch die Detektionsmittel verlaufenden Teilabschnitt nur eines Teils der Verbindungsleitungen fließt. Ziehen Verbraucher zusätzlich Strom, so gibt es einen Stromoffset, aber es fließt ein bestimmter Anteil des Gesamtstroms durch den Teilabschnitt nur eines Teils einer Verbindungsleitung.

Eine Umgehungsleitung der beschriebenen Art ist zur Prüfung eines Fehlerstromschutzschalters bekannt. Der Fehlerstromschutzschalter wird dann mit einer Prüftaste betätigt. Vorliegend kann vorgesehen sein, dass die Mittel zum Öffnen jedes Trennkontakts im Falle des Auftretens eines Lichtbogens eine Steuereinheit umfassen, die ein Schließen des Schalters in der Umgehungsleitung im Falle des Erfassens des Auftretens eines Lichtbogens bewirkt, z. B. indem ein passendes Relais mit einem geeigneten Strom zum Auslösen beaufschlagt wird. Durch das Schließen des Schalters der Umgehungsleitung wird das Auftreten eines Fehlerstroms für die Detektionsmittel simuliert, und der Mechanismus, mit Hilfe dessen die Trennkontakte geöffnet werden, wird in Gang gesetzt. Durch das einfache Ansteuern des Schalters mittels der Steuereinheit muss die Lichtbogenfunktionalität nicht über einen eigenen geeigneten Mechanismus zum direkten Öffnen der Trennkontakte verfügen, sondern es wird eben indirekt über die Mittel zum Öffnen der Trennkontakte im Falle eines Fehlerstroms gearbeitet.

Bei einer bekannten Art von Fehlerstromschutzschaltern werden ein Summenstromwandler und ein Magnet dazu verwendet, den Schutzschalter im Falle eines Fehlerstroms auszulösen. Eine Sekundärwicklung des Summenstromwandlers ist dabei dazu ausgelegt, den Magneten im Falle eines Fehlerstroms zu bewegen. Eine Ausführungsform der Erfindung bildet einen solchen Fehlerstromschutzschalter weiter, indem eine Einrichtung zum Bewegen des Magneten bereitgestellt ist, die einen Trennkontakt im Falle des Auftretens eines Lichtbogens öffnet.

Der Magnet kann durch eine weitere Spule bewegt werden, die genau so auf den Magneten einwirkt wie die Sekundärwicklung des Summenstromwandlers. Es ist aber auch möglich, diese Sekundärwicklung selbst zum Bewegen des Magneten zu nutzen. Es muss dann einfach ein Strom von den Mitteln zum Öffnen jedes Trennkontakts im Falle des Auftretens eines Lichtbogens in die Sekundärspule eingeprägt werden. Auch diese Weiterbildung der Erfindung erweitert einen Fehlerstromschutzschalter um eine Schutzfunktion vor Lichtbögen, ohne dass zusätzliche mechanische Vorrichtungen in dem Modul vorgesehen werden müssen.

In einer alternativen Ausführungsform des erfindungsgemäßen Fehlerstromschutzschalters ist eine mechanische Auslöseeinrichtung auf die Trennkontakte einzuwirken ausgelegt und eine Einrichtung zum Betätigen dieser mechanischen Auslöseeinrichtung vorgesehen. Eine solche Einrichtung zum Betätigen einer mechanischen Auslöseeinrichtung kann an die Mittel zum Öffnen jedes Trennkontakts im Falle des Auftretens eines Lichtbogens in optimaler Weise angepasst werden, so dass die mechanische Auslöseeinrichtung besonders schnell und zuverlässig betätigt wird, wenn ein Lichtbogen auftritt. Eine solche Einrichtung zum Betätigen kann ein Magnet sein, der durch eine Spule bewegbar ist. Diese Spule kann dann beispielsweise von den Mitteln zum Erfassen, ob ein Lichtbogen auftritt, elektrisch ansteuerbar sein. Anstelle eines Magneten kann auch ein elektrisch betriebener Aktor verwendet werden.

Die Mittel zum Erfassen, ob in dem Stromkreis, in dem die Verbindungsleitungen geschaltet sind, ein Lichtbogen auftritt, können besagtes Erfassen insbesondere aufgrund einer Analyse des in dem Stromkreis fließenden Stroms bewerkstelligen. Daher gewinnen sie bevorzugt an zumindest einer der Verbindungsleitungen eine diesbezügliche Information, nämlich eine Information über den in dem Stromkreis fließenden Strom.

Eine zum Erfassen, ob ein Lichtbogen in dem Stromkreis auftritt, wichtige Information ist die Amplitude des Stroms. Geeignete Mittel zum Messen dieser Amplitude sollten daher bereitgestellt sein, und diese können einen Stromwandler und einen nachgeschalteten Verstärker umfassen. Der Stromwandler muss lediglich an einer einzigen der Verbindungsleitungen angeordnet sein.

Es kann auch anhand des Hochfrequenzrauschens des Stroms erfasst werden, ob ein Lichtbogen im Stromkreis auftritt. Somit umfassen die Mittel zum Erfassen in einer bevorzugten Ausführungsform einen Hochfrequenzempfänger.

Zu den Mitteln zum Erfassen gehört bevorzugt auch eine Auswerteeinheit, die bevorzugt eine elektronische Auswerteeinheit ist, und diese empfängt von den Mitteln zum Messen der Amplitude die Messsignale und die Ausgangssignale des HF-Empfängers. Bei Erfüllung bestimmter Kriterien steuert die Auswerteeinheit einen Schalter an. Die Auswerteeinheit, die als Mikrocontroller ausgebildet sein kann, auf dem ein Algorithmus abläuft, kann nach sehr komplexen Kriterien und Kriterienkombinationen vorgehen. Die beiden Hauptkriterien, anhand derer erfasst werden kann, ob ein Lichtbogen auftritt, bestehen in dem Überschreiten einer bestimmten Amplitude durch den Strom, z. B. wenn die Stromstärke 5 A überschreitet, und in einer periodischen Variation des hochfrequenten Rauschens mit dem Strom.

Nachfolgend werden bevorzugte Ausführungsformen der Erfindung unter Bezug auf die Zeichnungen beschrieben. Dabei zeigen:
- FIG 1: schematisch eine Ausführungsform des erfindungsgemäßen Fehlerstromschutzschalters, bei der ein Fehlerstrom simuliert wird, wenn ein Lichtbogen auftritt,
- FIG 2: eine Ausführungsform des erfindungsgemäßen Fehlerstromschutzschalters, die einen Magneten eines Summenstromwandlers bewegt, wenn ein Lichtbogen auftritt,
- FIG 3: eine Ausführungsform des erfindungsgemäßen Fehlerstromschutzschalters, bei der eine Auslöseeinheit direkt betätigt wird, wenn ein Lichtbogen auftritt.

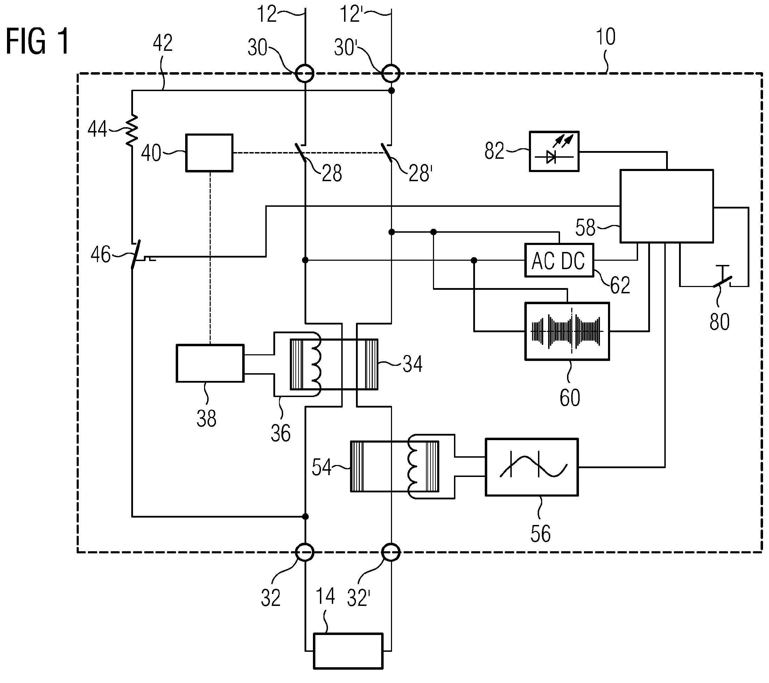

Ein in FIG 1 gezeigter Fehlerstromschutzschalter 10 ist als Teil eines Stromkreises vorgesehen, um auf den Stromfluss innerhalb dieses Stromkreises Einfluss nehmen zu können. Der Fehlerstromschutzschalter 10 wird über Leitungen 12, 12' mit einer Spannungsquelle, üblicherweise dem Versorgungsnetz gekoppelt. Auf der anderen Seite sind die Verbraucher angekoppelt, vorliegend ist symbolisch der Verbraucher 14 dargestellt. Es soll nun durch den Fehlerstromschutzschalter 10 das Auftreten eines Fehlerstroms entdeckt werden, also eines Stroms, der über eine der Leitungen 12, 12' zur Seite des Verbrauchers 14 fließt, aber über die andere der Leitungen 12', 12 nicht zurückfließt. Im Falle des Erfassens eines Fehlerstroms werden Trennkontakte 28, 28' geöffnet, damit der Stromfluss unterbrochen wird. Die Trennkontakte 28 bzw. 28' sind in einer Verbindungsleitung zwischen einem Eingangsanschluss 30 bzw. 30' einerseits und einem Ausgangsanschluss 32 bzw. 32' des Fehlerstromschutzschalters andererseits angeordnet.

Zum Erfassen eines Fehlerstroms dient ein Summenstromwandler 34. Durch den Summenstromwandler 34 sind beide Verbindungsleitungen, vom Anschluss 30 zum Anschluss 32 einerseits und vom Anschluss 30' zum Anschluss 32' andererseits, geführt. Im Regelfall, dass kein Fehlerstrom auftritt, also sämtlicher Strom, der über eine der Leitungen 12 und 12' zugeführt wird, auch über die jeweils andere Leitung der Leitungen 12 und 12' zurückgeführt wird, gleichen sich die Ströme in den beiden Verbindungsleitungen, die durch den Summenstromwandler 34 geführt sind, genau aus, und insbesondere heben sich die durch diese Ströme erzeugten Magnetfelder auf. Sobald ein Fehlerstrom auftritt, wird in dem Summenstromwandler 34 ein Restmagnatfeld induziert. Dieses induziert einen Strom in einer Sekundärwicklung 36 des Summenstromwandlers 34, wodurch ein Haltemagnet 38 bewegt wird, der auf einen Auslösemechanismus 40 einwirkt, und dieser Auslösemechanismus 40 bewirkt ein Öffnen der Trennkontakte 28 bzw. 28'.

Ist die Funktionalität eines Fehlerschutzstromschalters bereitgestellt, ist regelmäßig eine Prüfmöglichkeit vorgesehen. Hierzu ist eine Verbindungsleitung 42 bereitgestellt, und zwar verbindet diese den einen Eingangsanschluss 30' mit dem anderen Eingangsanschluss 30 derart, dass ein fließender Strom den Summenstromwandler 34 nur einfach durchläuft. Vorliegend ist durch die Verbindungsleitung 42 der in der FIG 1 rechte Durchlauf des Summenstromwandlers 34 umgangen, und der Strom fließt lediglich durch den linken Durchlauf, also in einem Teilabschnitt der Verbindungsleitung zwischen dem Eingangsanschluss 30 und dem Ausgangsanschluss 32. Damit der Strom über die Verbindungsleitung 42 begrenzt ist, ist ein Widerstandselement 44 vorgesehen. Der Strom soll nicht ständig über die Verbindungsleitung 42 fließen. Daher ist diese durch einen Schalter 46 unterbrochen.

Üblicherweise wird ein Schalter 46 bei einem Fehlerstromschutzschalter durch eine Prüftaste betätigt. Vorliegend ist ein in FIG 1 nicht gezeigtes elektrisches Relais vorgesehen, den Schalter 46 zu schließen. Das Ansteuern des Relais wird weiter unten beschrieben.

Der Fehlerstromschutzschalter 10 bewirkt ein Unterbrechen des Stromkreises bei einem Fehlerstrom. Nun soll der Stromkreis auch dann unterbrochen werden, wenn in dem Stromkreis an irgendeiner Stelle ein Lichtbogen aufgetreten ist. Hierzu muss zunächst einmal überhaupt erkannt werden, dass ein solcher Lichtbogen aufgetreten ist. Der Lichtbogen kann nicht am Ort seines Auftretens, das bei einem beliebigen Verbraucher sein kann, erkannt werden, sondern muss anhand des Stromflusses in dem Stromkreis erkannt werden. Der Fehlerstromschutzschalter 10 weist hierzu zwei verschiedene Einheiten auf: Zum einen ist eine der Verbindungsleitungen zwischen Eingangsanschluss und Ausgangsanschluss des Fehlerstromschutzschalters 10, vorliegend die Verbindungsleitung zwischen dem Eingangsanschluss 30 und dem Ausgangsanschluss 32, durch einen Stromwandler 54 geführt. Dem Stromwandler 54 ist ein Verstärkermodul 56 nachgeordnet, und das Verstärkermodul 56 ist mit einer Auswerte- und Steuereinheit 58 verbunden. Letzterer werden somit Daten über den in dem Stromkreis fließenden Laststrom zugeführt, wobei vorliegend von der Auswerteeinheit insbesondere die Amplitude des Laststroms erfasst wird. Als zweite Messeinheit, die zum Erfassen dient, ob ein Lichtbogen in dem Stromkreis auftritt, ist ein Hochfrequenzempfänger 60 in dem Fehlerstromschutzschalter 10 bereitgestellt, und zwar greift er Signale zwischen der Verbindungsleitung zwischen dem Eingangsanschluss 30 und dem Ausgangsanschluss 32 einerseits und der Verbindungsleitung zwischen dem Eingangsanschluss 30 und dem Ausgangsanschluss 32 andererseits ab. Die Messsignale werden ebenfalls der Auswerte- und Steuereinheit 58 zugeführt. Die Auswerte- und Steuereinheit 58 kann ein herkömmlicher Mikrocontroller sein. Um diesen mit Energie zu versorgen, ist ein Gleichrichter (AC/DC-Spannungswandler) 62 bereitgestellt, der die notwendige Gleichspannung zum Betrieb des Mikrocontrollers bereitstellt.

In der Auswerte- und Steuereinheit 58 wird ein Algorithmus eingesetzt, um anhand der von dem Verstärker 56 und dem Hochfrequenzempfänger 60 zugeführten Signale zu erkennen, ob in dem Stromkreis ein Lichtbogen aufgetreten ist bzw. zumindest aufgetreten sein könnte. Ein Lichtbogen ist zum einen durch einen Anstieg der Stromamplitude über ein vorbestimmtes Niveau oder auch bestimmte Stromsteigerungen erkennbar. Genaueres hierzu ist in dem US-Patent 6,031,699 beschrieben. Ein Lichtbogen ist zum anderen auch anhand des Hochfrequenzrauschens erkennbar, insbesondere an einem periodischen Verhalten desselben mit dem Strom. Details hierzu sind in dem US-Patent 5,729,45 beschrieben. Der von der Auswerte- und Steuereinheit 58 verwendete Algorithmus kann beide Kriterien alternativ, bevorzugt aber in Kombination verwenden, wobei über die genannten einfachen Zusammenhänge hinaus auch kompliziertere Zusammenhänge durch einen geeigneten Algorithmus erkennbar sein können. Es wird also durch die Mittel 54, 56, 60 und den Auswertealgorithmus in der Auswerte- und Steuereinheit 58 erfasst, ob ein Lichtbogen in dem Stromkreis auftritt.

Diese Erfassung ist selbstverständlich nur dann sinnvoll, wenn eine Unterbrechung des Stromkreises nach dem Erkennen des Auftretens eines Lichtbogens erfolgt. Hierzu beaufschlagt die Auswerte- und Steuereinheit 58 einfach das Relais zu dem Schalter 46 mit einem geeigneten Strom, so dass der Schalter 46 geschlossen wird. Dadurch wird wie oben beschrieben ein Fehlerstrom simuliert, so dass über den Summenstromwandler 34, die Sekundärspule 36, den Haltemagneten 38 und die Auswerteeinrichtung 40 ein Öffnen der Trennkontakte 28 und 28' erfolgt. Die Lichtbogenschutzfunktionalität umfasst somit im Ganzen lediglich elektronische Mittel 54, 56, 58, 60, und es wird ansonsten die Mechanik benutzt, die in einem Fehlerstromschutzschalter ohnehin vorhanden ist.

Da die Lichtbogenschutzfunktionalität elektronische Mittel verwendet, ist es notwendig, dass über den Gleichrichter 62 Energie aus dem Netz gezogen wird. Wie bei der IEC-Technik jedoch erforderlich, arbeitet die Fehlerstromschutzfunktionalität netzspannungsunabhängig (siehe die rein mechanische Wirkungskette der Elemente 36, 38, 40).

Die Funktion des Fehlerstromschutzschalters 10 kann mithilfe einer Prüftaste 80 geprüft werden, die einen Stromkreis schließt, wobei der Stromfluss durch die Auswerte- und Steuereinheit 58 erkannt wird, diese ihren Algorithmus durchlaufen lässt und das zu dem Schalter 46 gehörende Relais testweise ansteuert. Die Prüftaste 80 ist vorliegend nicht mechanisch mit dem Schalter 46 gekoppelt, hat aber letztlich dieselbe Wirkung wie eine mit dem Schalter 46 mechanisch gekoppelte Prüftaste, wie es sie bei herkömmlichen Fehlerstromschutzschaltern gibt.

Eine Anzeige 82 zeigt den Zustand des Moduls und die erfasste Ursache der letzten Auslösung an. Dadurch kann ein Techniker schnell feststellen, ob ein Isolationsfehler oder tatsächlich ein gefährlicher Lichtbogen die Ursache der Auslösung war.

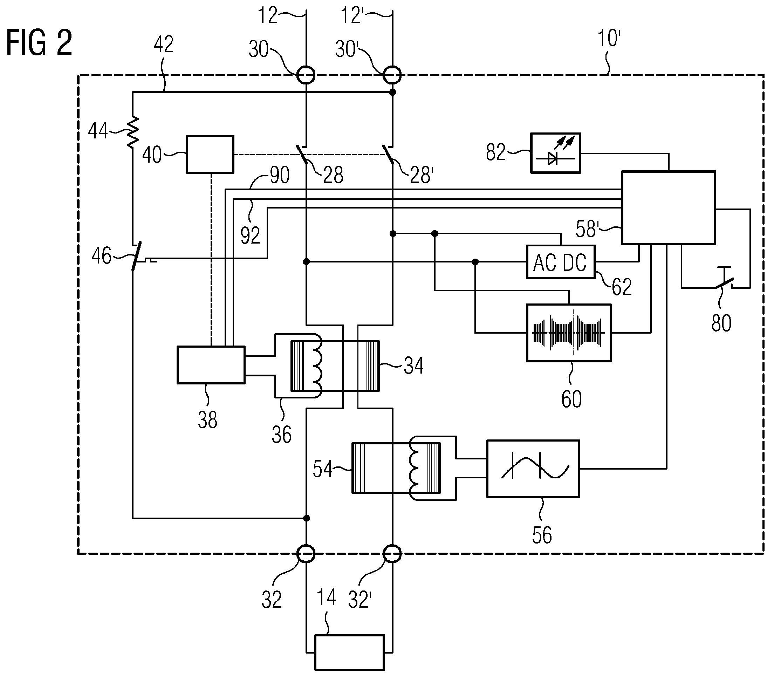

Der in FIG 2 gezeigte Fehlerstromschutzschalter 10' stimmt in seiner Bauweise mit dem in FIG 1 gezeigten Fehlerstromschutzschalter 10 in großen Teilen überein. Daher werden einander entsprechende Elemente der beiden Fehlerstromschutzschalter nicht noch einmal erläutert. In FIG 2 sind zudem für diejenigen Elemente, die dieselbe Funktion wie beim Fehlerstromschutzschalter 10 der FIG 1 aufweisen, dieselben Bezugszeichen vergeben.

Bei dem in FIG 2 gezeigten Fehlerstromschutzschalter 10' ist eine Auswerte- und Steuereinheit 58' über eine Hinleitung 90 und eine Rückleitung 92 in der Lage, einen Haltemagneten 38 direkt zu bewegen. Die Auswerte- und Steuereinheit 58' prägt dazu einen Strom über die Hinleitung 90 und die Rückleitung 92 in eine Sekundärwicklung 36 eines Summenstromwandlers 34 ein. Die Hinleitung 90 und die Rückleitung 92 bilden damit in Verbindung mit der Sekundärwicklung 36 im Sinne der Erfindung eine Einrichtung zum Bewegen des Haltemagneten 38.

Obwohl die Auswerte- und Steuereinheit 58' über die Hinleitung 90 und die Rückleitung 92 direkt auf den Haltemagneten 38 einwirken kann, sind in dem Fehlerstromschutzschalter 10' dennoch eine Verbindungsleitung 42, ein Widerstandselement 44 und ein Schalter 46 bereitgestellt, mit denen ein Fehlerstrom simuliert werden kann. Damit bleibt es weiterhin möglich, den Summenstromwandler 34 in der oben beschriebenen Weise mittels der Auswerte- und Steuereinheit 58' zu testen, wenn eine Prüftaste 80 gedrückt wird.

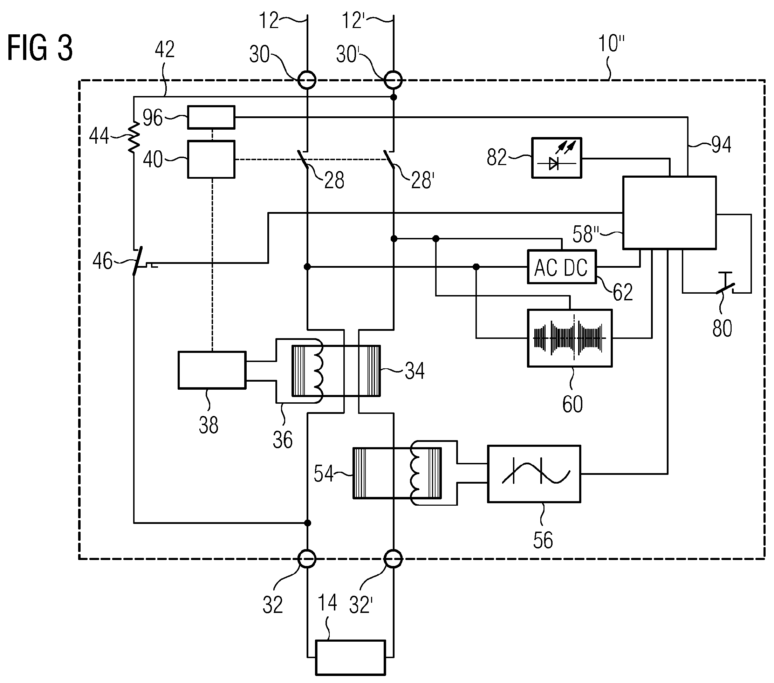

Der in FIG 3 dargestellte Fehlerstromschutzschalter 10" weist mit dem in FIG 1 gezeigten Fehlerstromschutzschalter 10 ebenfalls viele Übereinstimmungen auf. Entsprechend sind funktionsgleiche Elemente mit denselben Bezugszeichen versehen.

Bei dem in FIG 3 gezeigten Fehlerstromschutzschalter 10" löst eine Auswerte- und Steuereinheit 58" bei Auftreten eines Lichtbogens einen mechanischen Auslösemechanismus 40 direkt durch einen eigens dafür bereitgestellten Haltemagneten 96 aus. Die Auswerte- und Steuereinheit 58" steuert dabei über eine Signalleitung 94 eine zum Haltemagneten 96 gehörige Spule elektrisch an, die den Haltemagneten 96 dadurch aus einer Ruhelage bewegt. Der Haltemagnet 96 betätigt dann den mechanischen Auslösemechanismus 40, wodurch Trennkontakte 28, 28' in der bereits zu FIG 1 beschriebenen Weise geöffnet werden.

In einer nicht dargestellten Ausführungsform eines erfindungsgemäßen Fehlerstromschutzschalters wird anstelle eines Haltemagneten ein elektrisch betriebener Aktor verwendet. Ein solcher Aktor kann einen mechanischen Auslösemechanismus beispielsweise mittels eines Piezo-Elements betätigen. Die elektrische Energie zum Betreiben des Aktors wird dabei von einem Gleichrichter bereitgestellt, wie er bei dem in FIG 3 gezeigten Fehlerstromschutzschalter 10" als Gleichrichter 62 dargestellt ist.

Zusammenfassend ist durch die Ausführungsbeispiele gezeigt, wie es durch die Erfindung ohne einen übermäßigen Aufwand ermöglicht wird, bei einem Fehlerstromschutzschalter zusätzlich einen Schutz von Stromkreisen vor Lichtbögen bereitzustellen. Der erfindungsgemäße Fehlerstromschutzschalter hat zudem den Vorteil, dass seine Fehlerstromschutzfunktion weiterhin netzspannungsunabhängig bereitgestellt wird, d.h. also konform zur IEC-Technik.

### Bezugszeichenliste

- 10, 10', 10'': Fehlerstromschutzschalter
- 12, 12': Leitungen
- 14: Verbraucher
- 28, 28': Trennkontakte
- 30, 30': Eingangsanschlüsse
- 34: Summenstromwandler
- 36: Sekundärwicklung
- 38: Haltemagnet
- 40: Auslösemechanismus
- 42: Verbindungsleitung
- 44: Widerstandselement
- 46: Schalter
- 54: Stromwandler
- 56: Verstärkermodul
- 58, 58', 58 ": Steuereinheit
- 60: Hochfrequenzempfänger
- 62: Gleichrichter
- 80: Prüftaste
- 82: Anzeige
- 90: Hinleitung
- 92: Rückleitung
- 94: Signalleitung
- 96: Haltemagnet

## Patentansprüche

1. Fehlerstromschutzschalter (10, 10', 10''), mit zumindest zwei Eingangsanschlüssen (30, 30') und zumindest zwei Ausgangsanschlüssen (32, 32'), wobei je ein Eingangsanschluss (30 ,30') über eine Verbindungsleitung mit je einem Ausgangsanschluss (32, 32') verbunden ist, wobei in zumindest einer der Verbindungsleitungen ein Trennkontakt (28, 28') angeordnet ist, und mit Mitteln (34, 36, 38, 40) zum Öffnen jedes Trennkontakts (28, 28') im Falle eines Fehlerstroms, mit Mitteln (54, 56, 60, 58, 58', 58'') zum Erfassen, ob in einem Stromkreis, in den die Verbindungsleitungen geschaltet sind, ein Lichtbogen auftritt, und durch Mittel (58, 42, 44, 46, 58', 90, 92, 58'', 94, 96) zum Öffnen jedes Trennkontaktes (28, 28') im Falle des Auftretens eines Lichtbogens,
**dadurch gekennzeichnet, dass** die Mittel (34, 36, 38, 40) zum Öffnen jedes Trennkontakts (28, 28') im Falle eines Fehlerstroms von einer an den Eingangsanschlüssen (30, 30')anliegenden Spannung unabhängig arbeiten,
wobei die Mittel zum Öffnen jedes Trennkontakts (28, 28') im Falle eines Fehlerstroms Detektionsmittel (34, 36) aufweisen, durch die jeweils ein Teilabschnitt jeder Verbindungsleitung läuft, und bei dem die Mittel zum Öffnen jedes Trennkontakts im Falle des Auftretens eines Lichtbogens eine Umgehungsleitung (42) mit einem Schalter (46) umfassen, die eine der Verbindungsleitungen mit einer anderen der Verbindungsleitungen derart verbindet, dass bei geschlossenem Schalter (46) und im Falle, dass die Verbindungsleitungen in einem Stromkreis geschaltet sind, ein Strom oder ein Anteil des Gesamtstroms durch den durch die Detektionsmittel (34) verlaufenden Teilabschnitt nur eines Teils aller Verbindungsleitungen fließt.

2. Fehlerstromschutzschalter (10) nach Anspruch 1, bei dem die Mittel zum Öffnen jedes Trennkontakts im Falle des Auftretens eines Lichtbogens eine Steuereinheit (58) umfassen, die ein Schließen des Schalters (46) in der Umgehungsleitung (42) im Falle des Erfassens des Auftretens eines Lichtbogens bewirkt.

3. Fehlerstromschutzschalter (10') nach Anspruch 1, bei dem
- die zum Öffnen jedes Trennkontakts (28, 28') im Falle eines Fehlerstroms bereitgestellten Mittel (34, 36, 38, 40) einen Summenstromwandler (34) und einen Magneten (38) umfassen, wobei
- eine Sekundärwicklung (36) des Summenstromwandlers (34) dazu ausgelegt ist, im Falle eines Fehlerstroms den Magneten (38) zu bewegen, **dadurch gekennzeichnet, dass**
- die zum Öffnen jedes Trennkontakts im Falle des Auftretens eines Lichtbogens bereitgestellten Mittel (54, 56, 60, 58', 90, 92, 36) eine Einrichtung (90, 92, 36) zum Bewegen des Magneten (38) umfassen.

4. Fehlerstromschutzschalter (10") nach Anspruch 1, bei dem die zum Öffnen jedes Trennkontakts im Falle eines Fehlerstroms bereitgestellten Mittel (34, 36, 38, 40) eine mechanische Auslöseeinrichtung (40) umfassen, die auf die Trennkontakte (28, 28') einzuwirken ausgelegt ist,
**dadurch gekennzeichnet, dass**
die zum Öffnen jedes Trennkontakts im Falle des Auftretens eines Lichtbogens bereitgestellten Mittel (54, 56, 60, 58'', 94, 96) eine Einrichtung (94, 96) zum Betätigen der mechanischen Auslöseeinrichtung (40) umfassen.

5. Fehlerstromschutzschalter (10, 10', 10'') nach einem der vorhergehenden Ansprüche, bei dem die Mittel zum Erfassen an zumindest einer der Verbindungsleitungen eine Information über den in dem Stromkreis fließenden Strom gewinnen.

6. Fehlerstromschutzschalter (10, 10', 10'') nach Anspruch 5, bei dem die Mittel zum Erfassen Mittel (54, 56, 58, 58', 58'') zum Messen der Amplitude des über eine Verbindungsleitung fließenden Stroms umfassen.

7. Fehlerstromschutzschalter (10, 10', 10") nach Anspruch 5 oder 6, bei dem die Mittel zum Erfassen einen Hochfrequenzempfänger (60) umfassen.

8. Fehlerstromschutzschalter (10, 10', 10'') nach Anspruch 6 oder 7, bei dem die Mittel zum Erfassen eine Auswerteeinheit (58, 58', 58'') umfassen, die den Mitteln zum Messen (54, 56) oder dem Hochfrequenzempfänger (60) nachgeordnet oder Teil zumindest eines dieser ist, und die bei Erfüllung bestimmter Kriterien einen Schalter (46) oder eine Einrichtung (90, 92, 36) zum Bewegen eines Magneten (38) oder eine Einrichtung (94, 96) zum Betätigen einer mechanischen Auslöseeinrichtung (40) ansteuert.

## Claims

1. Residual current device (10, 10', 10") comprising at least two input terminals (30, 30') and at least two output terminals (32, 32'), each input terminal (30, 30') being connected by a connecting cable to one output terminal (32, 32') respectively, a break contact (28, 28') being arranged in at least one of the connecting cables, and comprising means (34, 36, 38, 40) for opening each break contact (28, 28') in the event of a residual current and comprising means (54, 56, 60, 58, 58', 58") for detecting whether an arc occurs in an electric circuit in which the connecting cables are switched, and by means (58, 42, 44, 46, 58', 90, 92, 58", 94, 96) for opening each break contact (28, 28') in the event of an arc occurring, **characterised in that** the means (34, 36, 38, 40) for opening each break contact (28, 28') in the event of a residual current operate independently of a voltage present at the input terminals (30, 30'),
wherein the means for opening each break contact (28, 28') in the event of a residual current comprise detection means (34, 36) through which a section of each connecting cable respectively runs, and in which the means for opening each break contact in the event of an arc occurring comprise a bypass (42) with a switch (46) which connects one of the connecting cables to another of the connecting cables in such a way that when the switch (46) is closed and in the event that the connecting cables are connected in an electric circuit, a current or a portion of the total current flows through the section, running through the detection means (34), of only a part of all connecting cables.

2. Residual current device (10) according to claim 1, wherein the means for opening each break contact in the event of an arc occurring comprise a control unit (58) which closes the switch (46) in the bypass (42) in the event of the occurrence of an arc being detected.

3. Residual current device (10') according to claim 1, wherein
- the means (34, 36, 38, 40) provided for opening each break contact (28, 28') in the event of a residual current comprise a core-balance transformer (34) and a magnet (38),
wherein
- a secondary winding (36) of the core-balance transformer (34) is designed to move the magnet (38) in the event of a residual current,
**characterised in that**
- the means (54, 56, 60, 58', 90, 92, 36) provided for opening each break contact in the event of an arc occurring comprise a device (90, 92, 36) for moving the magnet (38).

4. Residual current device (10") according to claim 1, wherein the means (34, 36, 38, 40) provided for opening each break contact in the event of a residual current comprise a mechanical trigger mechanism (40) which is designed to act on the break contacts (28, 28'),
**characterised in that**
the means (54, 56, 60, 58', 94, 96) provided for opening each break contact in the event of an arc occurring comprise a device (94, 96) for actuating the mechanical trigger mechanism (40).

5. Residual current device (10, 10', 10") according to any one of the preceding claims, wherein the means for detection obtain information about the current flowing in the electric circuit at one of the connecting cables at least.

6. Residual current device (10, 10', 10") according to claim 5, wherein the means for detection comprise means (54, 56, 58, 58', 58") for measuring the amplitude of the current flowing via a connecting cable.

7. Residual current device (10, 10', 10") according to claim 5, wherein the means for detection comprise a high-frequency receiver (60).

8. Residual current device (10, 10', 10") according to claim 6 or 7, wherein the means for detection comprise an evaluation unit (58, 58', 58") which is arranged downstream of the means for measuring (54, 56) or the high-frequency receiver (60), or is part of at least one of these, and which when fulfilling certain criteria controls a switch (46) or a device (90, 92, 36) for moving a magnet (38) or a device (94, 96) for actuating a mechanical trigger mechanism (40).

## Revendications

1. Commutateur de protection contre les courants de défaut (10, 10', 10"), comprenant au moins deux bornes d'entrée (30, 30') et au moins deux bornes de sortie (32, 32'), les bornes d'entrée (30, 30') étant reliées respectivement à une borne de sortie (32, 32') par l'intermédiaire d'une ligne de liaison, un contact de coupure (28, 28') étant placé dans au moins une desdites lignes de liaison, et des moyens (34, 36, 38, 40) permettant d'ouvrir chaque contact de coupure (28, 28') en cas de courant de défaut, des moyens (54, 56, 60, 58, 58', 58'') permettant de détecter si un arc électrique apparaît dans un circuit électrique dans lequel les lignes de liaison sont montées, et des moyens (58, 42, 44, 46, 58', 90, 92, 58'', 94, 96) permettant d'ouvrir chaque contact de coupure (28, 28') en cas de l'apparition d'un arc électrique,
**caractérisé en ce que** les moyens (34, 36, 38, 40) permettant d'ouvrir chaque contact de coupure (28, 28') en cas de courant de défaut fonctionnent indépendamment d'une tension appliquée aux bornes d'entrée (30, 30'), lesdits moyens permettant d'ouvrir chaque contact de coupure (28, 28') en cas de courant de défaut comprenant des moyens de détection (34, 36) par lesquels passe respectivement une portion de chaque ligne de liaison, et lesdits moyens permettant d'ouvrir chaque contact de coupure en cas d'apparition d'un arc électrique comprennent une ligne de dérivation (42) avec un interrupteur (46), qui relie une des lignes de liaison à une autre des lignes de liaison, de telle sorte que quand l'interrupteur (46) est fermé, et dans le cas où les lignes de liaison sont montées dans un circuit électrique, un courant ou une composante du courant total circule dans la portion passant par les moyens de détection (34) de seulement une partie de toutes les lignes de liaison.

2. Commutateur de protection contre les courants de défaut (10) selon la revendication 1, dans lequel les moyens permettant d'ouvrir chaque contact de coupure en cas d'apparition d'un arc électrique comprennent une unité de commande (58), qui provoque une fermeture de l'interrupteur (46) dans la ligne de dérivation (42) lorsque l'apparition d'un arc électrique est détectée.

3. Commutateur de protection contre les courants de défaut (10') selon la revendication 1, dans lequel
- les moyens (34, 36, 38, 40) fournis pour ouvrir chaque contact de coupure (28, 28') en cas de courant de défaut comprennent un transformateur de courant cumulé (34) et un aimant (38),
- un enroulement secondaire (36) du transformateur de courant cumulé (34) étant adapté pour déplacer l'aimant (38) en cas de courant de défaut,
**caractérisé en ce que**
- les moyens (54, 56, 60, 58', 90, 92, 36) fournis pour ouvrir chaque contact de coupure en cas d'apparition d'un arc électrique comprennent un dispositif (90, 92, 36) permettant de déplacer l'aimant (38).

4. Commutateur de protection contre les courants de défaut (10") selon la revendication 1, dans lequel les moyens (34, 36, 38, 40) fournis pour ouvrir chaque contact de coupure en cas de courant de défaut comprennent un dispositif de déclenchement mécanique (40), adapté pour agir sur les contacts de coupure (28, 28'),
**caractérisé en ce que**
les moyens (54, 56, 60, 58" , 94, 96) fournis pour ouvrir chaque contact de coupure en cas d'apparition d'un arc électrique comprennent un dispositif (94, 96) permettant d'actionner le dispositif de déclenchement mécanique (40).

5. Commutateur de protection contre les courants de défaut (10, 10', 10") selon l'une des revendications précédentes, dans lequel les moyens de détection obtiennent sur au moins une des lignes de liaison une information sur le courant circulant dans le circuit électrique.

6. Commutateur de protection contre les courants de défaut (10, 10', 10") selon la revendication 5, dans lequel les moyens de détection comprennent des moyens (54, 56, 58, 58', 58") permettant de mesurer l'amplitude du courant circulant sur une ligne de liaison.

7. Commutateur de protection contre les courants de défaut (10, 10', 10") selon la revendication 5 ou 6, dans lequel les moyens de détection comprennent un récepteur haute fréquence (60).

8. Commutateur de protection contre les courants de défaut (10, 10', 10") selon la revendication 6 ou 7, dans lequel les moyens de détection comprennent une unité d'évaluation (58, 58', 58"), qui est montée en aval des moyens de mesure (54, 56) ou du récepteur haute fréquence (60) ou fait partie d'au moins un de ces derniers, et qui, lorsque certains critères sont remplis, commande un interrupteur (46) ou un dispositif (90, 92, 36) permettant de déplacer un aimant (38) ou un dispositif (94, 96) permettant d'actionner un dispositif de déclenchement mécanique (40).
